# EUROPEAN PATENT APPLICATION

(11) **EP 4 611 431 A1**
(43) Date of publication of application: **03.09.2025**
(21) Application number: 23884676.0
(22) Date of filing: 24.10.2023
(51) Int. Cl.: H04W 36/00

(54) **CELL SELECTION METHOD AND TERMINAL DEVICE**

(30) Priority: 31.10.2022 CN 202211349198
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); CHEN, Lei, Shenzhen, Guangdong 518129 (CN); WU, Yiling, Shenzhen, Guangdong 518129 (CN)
(74) Representative: Gill Jennings & Every LLP
(86) International application number: PCT/CN2023/126308
(87) International publication number: WO 2024/093744

(57) **Abstract**

This application provides a cell selection method and a terminal device, and relates to the communication field. In a cell selection process, a requirement on a capability of the terminal device is lowered. The method includes: The terminal device obtains a target signal of a target cell; and when the terminal device continuously successfully obtains a target signals, the terminal device determines the target cell as a cell on which camping is allowed, where a is a positive integer greater than a threshold b, and the cell on which camping is allowed is a cell that meets a cell selection criterion requirement of the terminal device; or when a quantity of target signals continuously successfully obtained by the terminal device is less than or equal to a threshold b, the terminal device determines the target cell as a cell on which camping is not allowed, where the cell on which camping is not allowed is a cell that does not meet a cell selection criterion requirement of the terminal device.

## Description

This application claims priority to Chinese Patent Application No. 202211349198.5, filed with the China National Intellectual Property Administration on October 31, 2022 and entitled "CELL SELECTION METHOD AND TERMINAL DEVICE", which is incorporated herein by reference in its entirety.

### TECHNICAL FIELD

Embodiments of this application relate to the field of communication technologies, and in particular, to a cell selection method and a terminal device.

### BACKGROUND

With development of mobile network technologies such as 5th generation (5th generation, 5G) mobile communication, increasingly more terminal devices need to be connected to a mobile network. When a terminal device accesses a network, a plurality of cells are usually available for selection. Therefore, the terminal device needs to select an appropriate cell from the plurality of cells for wireless network connection.

In current cell selection technologies, a terminal device needs to search for a cell in a network environment in which the terminal device is located and power corresponding to the cell, then acquire a cell with best coverage in the network environment based on a search result, perform frame synchronization on the cell, and obtain a physical cell identifier (identity document, ID) of the cell. Then, the terminal device reads a system message of the cell and measures signal strength and signal quality of the cell, to determine whether the cell meets a camping condition.

In existing multi-cell selection solutions, because steps of measuring the signal quality of the cell by the terminal device are complex, and precise parameter calculation needs to be performed, measurement requirements for the terminal device are high. This is not suitable for a terminal device with a low-complexity design and a limited capability.

### SUMMARY

Embodiments of this application provide a cell selection method and a terminal device. In a cell selection process, a requirement on a capability of the terminal device is lowered.

According to a first aspect, an embodiment of this application provides a cell selection method, applied to a terminal device. The method includes: the terminal device obtains a target signal of a target cell; and when the terminal device continuously successfully obtains a target signals, the terminal device determines the target cell as a cell on which camping is allowed, where a is a positive integer greater than a threshold b, and the cell on which camping is allowed is a cell that meets a cell selection criterion requirement of the terminal device; or when a quantity of target signals continuously successfully obtained by the terminal device is less than or equal to a threshold b, the terminal device determines the target cell as a cell on which camping is not allowed, where the cell on which camping is not allowed is a cell that does not meet a cell selection criterion requirement of the terminal device.

According to the cell selection method provided in this embodiment of this application, without complex measurement and calculation, the terminal device can determine, depending on only whether the quantity of target signals is greater than the threshold b, whether the target cell is a cell on which camping is allowed. This lowers a requirement on a data processing capability of the terminal device, and reduces measurement overheads of the terminal device. Steps are simple and flexible. This is applicable to a terminal device with a low-complexity design and a limited capability.

In a possible implementation, that the terminal device continuously successfully obtains the a target signals includes: the terminal device continuously successfully obtains the a target signals within time T1; or
the quantity of target signals continuously successfully obtained by the terminal device being less than or equal to the threshold b includes: a quantity of target signals continuously successfully obtained by the terminal device within time T1 is less than or equal to the threshold b.

In another possible implementation, the terminal device may count, by using time at which the target signal is found as start time, a quantity of target signals continuously successfully obtained after the time.

Alternatively, the terminal may periodically trigger, by using j as a periodicity, a procedure of counting a quantity of continuously successfully obtained target signals, where j may be carried in the target signal, or may be a preset parameter stored by the terminal.

In another possible implementation, after the terminal device determines the target cell as a cell on which camping is not allowed, the method further includes: when a quantity of target signals continuously successfully obtained within time T2 is greater than a threshold c, the terminal device re-determines the target cell as a cell on which camping is allowed, where the threshold c is greater than the threshold b; or after the terminal device determines the target cell as a cell on which camping is not allowed, the method further includes: the terminal device skips, within time T3, selecting the target cell as a cell on which camping is allowed.

According to the cell selection method provided in this embodiment of this application, after the terminal device determines the target cell as a cell on which camping is not allowed, the terminal device imposes a limitation on selecting a target cell for camping, so that the terminal device does not repeatedly monitor, within short time, the target signal of the cell that does not meet a selection criterion.

In another possible implementation, after the terminal device determines the target cell as a cell on which camping is not allowed, the method further includes: when a quantity of target signals continuously successfully obtained within time T2 is greater than a threshold c, the terminal device re-determines the target cell as a cell on which camping is allowed, where the threshold c is less than the threshold b.

According to the cell selection method provided in this embodiment of this application, after the terminal device determines the target cell as a cell on which camping is not allowed, the terminal device relaxes the cell selection criterion requirement, to avoid that the terminal always cannot find a cell that meets the cell selection criterion condition.

In another possible implementation, after the terminal device determines the target cell as a cell on which camping is allowed, the method further includes: if a first condition is met, the terminal device determines that the terminal device is in an abnormal working state, and the terminal device re-determines a cell on which camping is allowed.

In another possible implementation, the first condition includes at least one of the following: a quantity of times that the terminal device does not continuously successfully receive the target signal is greater than m; the terminal device determines that a quantity of random access failures is greater than n; the terminal device determines that a quantity of data transmission failures is greater than s; and the terminal device determines that a block error rate of data received within time T4 is greater than t.

In another possible implementation, that the terminal device re-determines a cell on which camping is allowed includes: the terminal device skips, within time T3, selecting the target cell as a cell on which camping is allowed; or only when a quantity of target signals continuously successfully obtained within time T2 is greater than a threshold i, the terminal device can re-determine the target cell as a cell on which camping is allowed, where the threshold i is greater than the threshold b.

According to the cell selection method provided in this embodiment of this application, when the terminal device re-determines a cell on which camping is allowed, the terminal device adds some restrictions for re-determining, within specific time, the target cell as a cell on which camping is allowed, so that the terminal device does not select again, within short time, the target cell that cannot meet a normal working requirement.

In another possible implementation, that the terminal device re-determines a cell on which camping is allowed includes: when a quantity of target signals continuously successfully obtained within time T2 is greater than a threshold i, the terminal device re-determines the target cell as a cell on which camping is allowed, where the threshold i is less than the threshold b.

According to the cell selection method provided in this embodiment of this application, when the terminal device re-determines a cell on which camping is allowed, the terminal device relaxes the cell selection criterion requirement, to avoid that the terminal always cannot find a cell that meets the cell selection criterion condition.

In another possible implementation, the target signal includes at least one of a beacon, a reference signal, a synchronization signal, a paging signal, downlink data, and a system message.

In another possible implementation, the target signal includes the time T1, the time T2, the time T3, the time T4, the threshold b, the threshold i, and/or the threshold c.

According to a second aspect, an embodiment of this application provides a cell selection method, applied to a terminal device. The method includes: a terminal device obtains a target signal of a target cell, where the target signal is used to generate a synchronization indication; and when a first protocol layer of the terminal device continuously successfully obtains d synchronization indications from a second protocol layer, the terminal device determines the target cell as a cell on which camping is allowed, where d is a positive integer greater than a threshold e, network layers of the terminal device include the first protocol layer and the second protocol layer, and the first protocol layer is higher than the second protocol layer; or when a quantity of synchronization indications continuously successfully obtained by a first protocol layer of the terminal device from a second protocol layer is less than or equal to a threshold e, or when a quantity of out-of-synchronization indications continuously successfully obtained by a first protocol layer of the terminal device from a second protocol layer is greater than a threshold e, the terminal device determines the target cell as a cell on which camping is not allowed, where the cell on which camping is not allowed is a cell that does not meet a cell selection criterion requirement of the terminal device.

According to the cell selection method provided in this embodiment of this application, the terminal device can determine, depending on only whether the quantity of synchronization indications is greater than the threshold d, whether the target cell is a cell on which camping is allowed. This lowers a requirement on a data processing capability of the terminal device, and reduces measurement overheads of the terminal device. Steps are simple and flexible. This is applicable to a terminal device with a low-complexity design and a limited capability.

In a possible implementation, after the terminal device determines the target cell as a cell on which camping is not allowed, the method further includes: when a quantity of synchronization indications continuously successfully received by the first protocol layer of the terminal device from the second protocol layer within time T2 is greater than a threshold f, the terminal device re-determines the target cell as a cell on which camping is allowed, where the threshold f is greater than the threshold e; or after the terminal device determines the target cell as a cell on which camping is not allowed, the method further includes: the terminal device skips, within time T3, selecting the target cell as a cell on which camping is allowed.

According to the cell selection method provided in this embodiment of this application, after the terminal device determines the target cell as a cell on which camping is not allowed, the terminal device adds some restrictions for re-determining, within specific time, the target cell as a cell on which camping is allowed, so that the terminal device does not repeatedly monitor, within short time, the target signal of the cell that does not meet a selection criterion.

In another possible implementation, after the terminal device determines the target cell as a cell on which camping is not allowed, the method further includes: when the quantity of synchronization indications continuously successfully obtained by the first protocol layer from the second protocol layer is greater than a threshold l, the terminal device re-determines the target cell as a cell on which camping is allowed, where the threshold l is less than the threshold e.

According to the cell selection method provided in this embodiment of this application, after the terminal device determines the target cell as a cell on which camping is not allowed, the terminal device relaxes the cell selection criterion requirement, to avoid that the terminal always cannot find a cell that meets the cell selection criterion condition.

In another possible implementation, after the terminal device determines the target cell as a cell on which camping is allowed, the method further includes: if a first condition is met, the terminal device determines that the terminal device is in an abnormal working state, and the terminal device re-determines a cell on which camping is allowed.

In another possible implementation, the first condition includes at least one of the following: a quantity of times that the terminal device does not continuously successfully receive the target signal is greater than m; the terminal device determines that a quantity of random access channel failures is greater than n; the terminal device determines that a quantity of data transmission failures is greater than s; and the terminal device determines that a block error rate of data received within time T4 is greater than t.

In another possible implementation, that the terminal device re-determines a cell on which camping is allowed includes: the terminal device skips, within time T3, selecting the target cell as a cell on which camping is allowed; or only when the quantity of synchronization indications continuously successfully obtained by the first protocol layer from the second protocol layer is greater than a threshold i, the terminal device can re-determine the target cell as a cell on which camping is allowed, where the threshold i is greater than the threshold e.

According to the cell selection method provided in this embodiment of this application, when the terminal device re-determines a cell on which camping is allowed, the terminal device adds some restrictions for re-determining, within specific time, the target cell as a cell on which camping is allowed, so that the terminal device does not select again, within short time, the target cell that cannot meet a normal working requirement.

In another possible implementation, that the terminal device re-determines a cell on which camping is allowed includes: when a quantity of target signals continuously successfully obtained within time T2 is greater than a threshold i, the terminal device re-determines the target cell as a cell on which camping is allowed, where the threshold i is less than the threshold e.

According to the cell selection method provided in this embodiment of this application, when the terminal device re-determines a cell on which camping is allowed, the terminal device relaxes the cell selection criterion requirement, to avoid that the terminal always cannot find a cell that meets the cell selection criterion condition.

In another possible implementation, the target signal includes at least one of a beacon, a reference signal, a synchronization signal, a paging signal, a system message, and downlink data.

In another possible implementation, the target signal includes the time T2, the time T3, the time T4, the threshold e, and/or the threshold f.

According to a third aspect, an embodiment of this application provides a cell selection method, applied to a terminal device. The method includes:
a terminal device obtains a target signal of a target cell; the terminal device determines a target cell selection value for the target cell based on signal quality of the target signal; and when the target cell selection value for the target cell is greater than zero, the terminal device determines the target cell as a cell on which camping is allowed, where the cell on which camping is allowed is a cell that meets a cell selection criterion requirement of the terminal device; or when the target cell selection value for the target cell is less than or equal to zero, the terminal device determines the target cell as a cell on which camping is not allowed, where the cell on which camping is not allowed is a cell that does not meet a cell selection criterion requirement of the terminal device.

According to the cell selection method provided in this embodiment of this application, the terminal device may determine, depending on whether the target cell selection value is greater than zero, whether the target cell is a cell on which camping is allowed. This lowers a measurement requirement for the terminal device. Steps are simple and flexible. This is applicable to a terminal device with a low-complexity design and a limited capability.

In another possible implementation, the target cell selection value for the target cell is obtained by subtracting a threshold g from the signal quality of the target signal, and the threshold g is a minimum receive level of the terminal device.

In another possible implementation, after the terminal device determines the target cell as a cell on which camping is not allowed, the method further includes: when a target cell selection value for the target cell within time T2 is greater than a threshold h, the terminal device re-determines the target cell as a cell on which camping is allowed, where the threshold h is greater than zero; or after the terminal device determines the target cell as a cell on which camping is not allowed, the method further includes: the terminal device skips, within time T3, selecting the target cell as a cell on which camping is allowed.

According to the cell selection method provided in this embodiment of this application, after the terminal device re-determines the target cell as a cell on which camping is not allowed, the terminal device adds some restrictions for re-determining, within specific time, the target cell as a cell on which camping is allowed, so that the terminal device does not select again, within short time, the target cell that cannot meet a normal working requirement.

In another possible implementation, after the terminal device determines the target cell as a cell on which camping is not allowed, the method further includes: when the target cell selection value for the target cell is greater than a threshold w, the terminal device re-determines the target cell as a cell on which camping is allowed, where the threshold w is less than zero.

According to the cell selection method provided in this embodiment of this application, after the terminal device determines the target cell as a cell on which camping is not allowed, the terminal device relaxes the cell selection criterion requirement, to avoid that the terminal always cannot find a cell that meets the cell selection criterion condition.

In another possible implementation, after the terminal device determines the target cell as a cell on which camping is allowed, the method further includes: if a first condition is met, the terminal device determines that the terminal device is in an abnormal working state, and the terminal device re-determines a cell on which camping is allowed.

In another possible implementation, the first condition includes: a quantity of times that the terminal device does not continuously successfully receive the target signal is greater than m; the terminal device determines that a quantity of random access channel failures is greater than n; the terminal device determines that a quantity of data transmission failures is greater than s; and/or the terminal device determines that a block error rate of data obtained within time T4 is greater than t.

In another possible implementation, that the terminal device re-determines a cell on which camping is allowed includes: the terminal device skips, within time T3, selecting the target cell as a cell on which camping is allowed; or when the target cell selection value for the target cell is greater than a threshold i, the terminal device re-determines the target cell as a cell on which camping is allowed, where the threshold i is greater than a threshold e.

According to the cell selection method provided in this embodiment of this application, when the terminal device re-determines a cell on which camping is allowed, the terminal device adds some restrictions for re-determining, within specific time, the target cell as a cell on which camping is allowed, so that the terminal device does not select again, within short time, the target cell that cannot meet a normal working requirement.

In another possible implementation, that the terminal device re-determines a cell on which camping is allowed includes: when the target cell selection value for the target cell is greater than a threshold i, the terminal device re-determines the target cell as a cell on which camping is allowed, where the threshold i is less than a threshold e.

According to the cell selection method provided in this embodiment of this application, when the terminal device re-determines a cell on which camping is allowed, the terminal device relaxes the cell selection criterion requirement, to avoid that the terminal always cannot find a cell that meets the cell selection criterion condition.

In another possible implementation, the target signal includes at least one of a beacon, a reference signal, a synchronization signal, a paging signal, a system message, and downlink data.

In another possible implementation, the target signal includes the time T2, the time T3, the time T4, the threshold g, and/or the threshold h.

According to a fourth aspect, a communication apparatus is provided, to implement the foregoing methods. The communication apparatus may be the terminal device in the first aspect, the second aspect, or the third aspect, or an apparatus included in the terminal device, for example, a chip or a chip system. When the apparatus is a chip system, the apparatus may include a chip, or may include a chip and another discrete device.

The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

According to a fifth aspect, a communication apparatus is provided, including a processor and a communication interface. The communication interface is configured to communicate with a module other than the communication apparatus, and the processor is configured to execute a computer program or instructions, to enable the communication apparatus to perform the method according to any one of the foregoing aspects. The communication apparatus may be the terminal device in the first aspect, the second aspect, or the third aspect, or an apparatus included in the terminal device, for example, a chip or a chip system. When the apparatus is a chip system, the apparatus may include a chip, or may include a chip and another discrete device.

According to a sixth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or the memory may exist independently of the processor. For example, the memory and the processor are two independent modules. The memory may be located outside the communication apparatus, or may be located inside the communication apparatus.

The communication apparatus may be the terminal device in the first aspect, the second aspect, or the third aspect, or an apparatus included in the terminal device, for example, a chip or a chip system. When the apparatus is a chip system, the apparatus may include a chip, or may include a chip and another discrete device.

According to a seventh aspect, a computer-readable storage medium is provided. The computer-readable storage medium stores a computer program or instructions. When the computer program or instructions are run on a communication apparatus, the communication apparatus is enabled to perform the method according to any one of the foregoing aspects.

According to an eighth aspect, a computer program product including instructions is provided. When the computer program product is run on a communication apparatus, the communication apparatus is enabled to perform the method according to any one of the foregoing aspects.

It may be understood that when the communication apparatus provided in any one of the fourth aspect to the eighth aspect is a chip, a sending action/function of the communication apparatus may be understood as outputting information, and a receiving action/function of the communication apparatus may be understood as inputting information.

For technical effects brought by any design of the fourth aspect to the eighth aspect, refer to technical effects brought by different designs of the first aspect to the third aspect. Details are not described herein again.

According to a ninth aspect, a communication system is provided. The communication system includes the terminal device in the foregoing aspects and an access network device to which the target cell in the foregoing aspects belongs.

It should be understood that descriptions of technical features, technical solutions, beneficial effects, or similar languages in this application do not imply that all features and advantages can be implemented in any single embodiment. On the contrary, it may be understood that descriptions of features or beneficial effects indicate that at least one embodiment includes specific technical features, technical solutions, or beneficial effects. Therefore, descriptions of technical features, technical solutions, or beneficial effects in this specification do not necessarily refer to a same embodiment. Further, the technical features, technical solutions, and beneficial effects described in embodiments may be combined in any appropriate manner. A person skilled in the art may understand that an embodiment may be implemented without one or more specific technical features, technical solutions, or beneficial effects in a specific embodiment. In other embodiments, additional technical features and beneficial effects may be identified in a specific embodiment that does not reflect all embodiments.

### BRIEF DESCRIPTION OF DRAWINGS

FIG. 1 is a schematic flowchart of selecting, inventory, and accessing between a tag and a reader;
FIG. 2 is a diagram of communication links between a reader and a tag in a distributed architecture according to an embodiment of this application;
FIG. 3 is a diagram of a structure of a communication system according to an embodiment of this application;
FIG. 4 is a diagram of a structure of another communication system according to an embodiment of this application;
FIG. 5 is a schematic flowchart of a cell selection method according to an embodiment of this application;
FIG. 6 is a diagram of a scenario in which a terminal device obtains a target signal according to an embodiment of this application;
FIG. 7 is a schematic flowchart of another cell selection method according to an embodiment of this application;
FIG. 8 is a schematic flowchart of another cell selection method according to an embodiment of this application;
FIG. 9 is a schematic flowchart of another cell selection method according to an embodiment of this application;
FIG. 10 is a schematic flowchart of another cell selection method according to an embodiment of this application;
FIG. 11 is a diagram of a tag coverage scenario according to an embodiment of this application;
FIG. 12 is a schematic flowchart of another cell selection method according to an embodiment of this application;
FIG. 13 is a diagram of a structure of a terminal device according to an embodiment of this application; and
FIG. 14 is a diagram of a structure of another terminal device according to an embodiment of this application.

### DESCRIPTION OF EMBODIMENTS

In the descriptions of this application, unless otherwise specified, the character "/" represents that associated objects are in an "or" relationship. For example, A/B may represent A or B. The term "and/or" in this application merely describes an association relationship between associated objects and represents that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily mean a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, an apparatus provided in embodiments of this application may also correspondingly implement these features or functions. Details are not described herein.

In this application, unless otherwise specified, for same or similar parts in embodiments, refer to each other. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

For ease of understanding of the technical solutions in embodiments of this application, related technologies of this application are first briefly described below.

### 1. Radio-frequency identification (radio-frequency identification, RFID) technology

The RFID technology is a non-contact automatic identification technology. An RFID system usually includes a reader (reader/interrogator) and a tag (tag). The reader may manage the tag through information exchange between the reader and the tag.

In the RFID system, the reader may perform select (select), inventory (inventory), and access (access) and other operations on the tag. The select operation is used to select one tag or a group of tags for inventory and access. The inventory operation may be understood as a process in which the reader identifies the tag. The access operation may be understood as a process in which the reader interacts with the tag. The tag needs to be identified by the reader and then accessed.

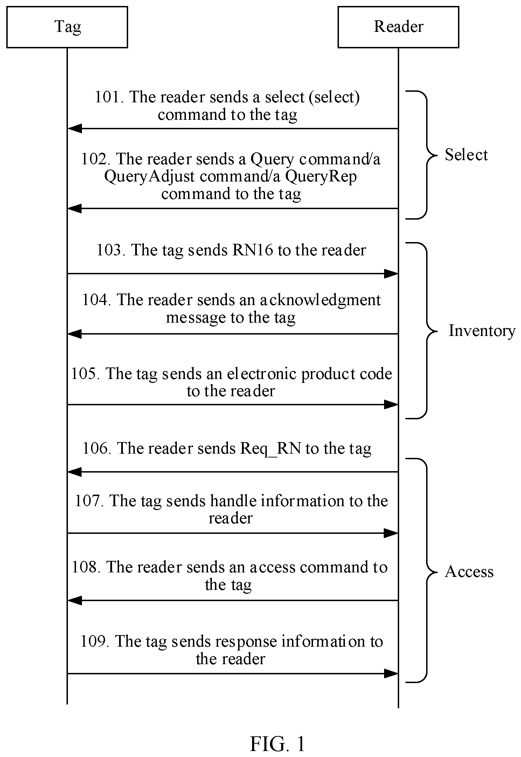

For example, a procedure in which the reader performs select, inventory, and access on the tag may be shown in FIG. 1. As shown in FIG. 1, the procedure includes the following steps.

101. The reader sends a select (select) command to the tag.

The reader sends the select (select) command to the tag, where the select command may be used to select one tag or a group of tags.

For example, the select command may include memory information, and a tag of which data stored in a storage area indicated by the memory information is consistent with a mask value is a tag selected by using the select command.

102. The reader sends a query (Query) command/a query adjust (QueryAdjust) command/a query representative (QueryRep) command to the tag.

The reader sends the Query command/the QueryAdjust command/the QueryRep command to the tag.

For a plurality of tags selected by the reader, inventory and access are performed in a time division multiplexing manner. To be specific, after ending inventory and access on a tag, the reader starts to perform inventory and access on a next tag. The following steps are described by using inventory and access on one tag as an example.

Step 101 and step 102 may be understood as selection operations performed by the reader on the tag. After the selection operations are completed, the reader may perform the following inventory operations on the tag.

103. The tag sends RN16 to the reader.

When a slot counter started by the tag is 0, the tag sends a 16-bit random number (RN16) to the reader in response to the command sent by the reader.

In a possible implementation, when the slot counter started by the tag is not 0, the tag does not send RN16 to the reader.

104. The reader sends an acknowledgment message to the tag.

If successfully receiving RN16 sent by the tag, the reader sends the acknowledgment (acknowledgment, ACK) message to the tag. The message includes the random number RN16.

105. The tag sends an electronic product code (electronic product code, EPC) to the reader.

After receiving the acknowledgment message sent by the reader, the tag sends the electronic product code to the reader when the random number RN16 carried in the acknowledgment message matches the random number RN16 sent in step 103.

Step 103 to step 105 may be understood as inventory operations performed by the reader on the tag. After the inventory operations are completed, the reader may perform the following access operations on the tag.

106. The reader sends a Req_RN instruction to the tag.

The reader sends the Req_RN instruction to the tag, where the Req_RN instruction includes RN16 that is the same as that in the foregoing steps.

107. The tag sends handle information to the reader.

After receiving Req_RN that includes RN16 and that is sent by the reader, the tag sends the handle information to the reader when RN16 sent by the reader is consistent with or matches RN16 generated by the tag previously.

In a possible implementation, the tag does not feed back the handle information to the reader when RN16 sent by the reader is different from or does not match RN16 generated by the tag previously.

108. The reader sends an access command to the tag.

After receiving the handle information sent by the tag, the reader sends the access command to the tag, where the access command includes the handle information in step 107.

109. The tag sends response information to the reader.

After receiving the access command sent by the reader to the tag, the tag verifies whether handle carried in the access command is consistent with handle sent by the tag to the reader in step 107. If the verification succeeds, to be specific, handle carried in the access command is consistent with handle sent by the tag to the reader in step 107, the tag sends the response information to the reader; or if the verification fails, to be specific, handle carried in the access command is different from handle sent by the tag to the reader in step 107, the tag sends an error notification to the reader, where the error notification indicates that handle carried in the access command is different from handle sent by the tag to the reader in step 107.

The foregoing is merely an example. Another type of operation is further included between the reader and the tag. For details, refer to related descriptions of the RFID system. The details are not described in this application.

The foregoing tag is an RFID tag. The tag may be classified into a passive tag, a semi-active tag, and an active tag. Working energy of the passive tag is provided by a reader. For example, a part of energy of a continuous wave (continuous wave, CW) sent by the reader is used for internal processing such as encoding/decoding and modulation/demodulation of the tag. In addition, the continuous wave is further used as a carrier to carry uplink information of the tag. A battery may be included inside the semi-passive tag. Internal processing such as encoding/decoding and modulation/demodulation may be powered by the battery, but the continuous wave of the reader still needs to be used as a carrier.

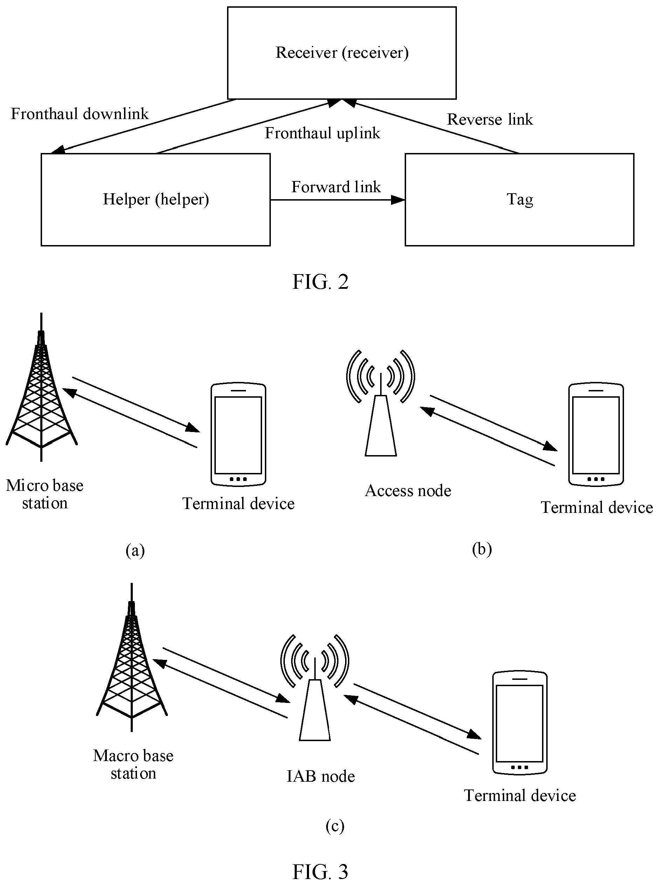

The reader is a device having a read/write function, and may be, for example, a device for reading or writing tag information. The reader may alternatively be understood as a device communicating with the tag, and may be in a form of a terminal device, a base station, or a device having a read/write function. For example, in a separated architecture, as shown in FIG. 2, the reader may include a helper (helper) and a receiver (receiver). A link from the helper to the tag may be referred to as a forward link or a downlink, a link from the tag to the receiver may be referred to as a reverse link or an uplink, a link from the receiver to the helper may be referred to as a fronthaul downlink, and a link from the helper to the receiver may be referred to as a fronthaul uplink. In this application, the helper may also be referred to as an excitation source.

For example, the helper is mainly configured to send a continuous wave to the tag on the forward link, and a signal sent by the tag is received by the receiver on the reverse link. In addition, the receiver may generate RFID signaling and send the RFID signaling to the helper over the fronthaul downlink, and then the helper forwards the RFID signaling to the tag through the forward link.

In the RFID system, the tag is simple in design, and application layer signaling and air interface signaling are mixed together for design. In addition, because the tag supports only microwatt-level or 100-microwatt-level power consumption, the tag does not support complex design and complex measurement. When a plurality of tags communicate with the reader at the same time, a time division multiplexing manner is usually used, and the plurality of tags use a serial reading manner. In this case, differentiation between a frequency domain and a code domain is not supported, and parallel performance is poor. Therefore, communication solutions for the tag need to be simple and direct, and measurement and calculation cannot be excessively complex.

### 2. Radio resource management (radio resource management, RRM)

A wireless network is deployed in cells, and each cell has its own coverage. After a terminal device is powered on, the terminal device needs to select, by using a cell selection process, an appropriate cell for camping, to obtain a service from the wireless network. In addition, the terminal device keeps moving. If moving out of coverage of a current serving cell and enters a new cell, the terminal device needs to perform cell reselection, and camp on the new cell, to obtain a better service. Cell selection and cell reselection processes belong to the radio resource management. The radio resource management is a necessary mechanism for cellular mobile communication systems. The radio resource management can assist new radio (new radio, NR) to implement load balancing, provide better user experience, and improve overall system performance. Cell selection/reselection is an autonomous behavior of the terminal device. The terminal device autonomously selects, by measuring signal quality of a serving cell and a neighboring cell, a cell with better signal quality/a higher priority for camping.

1. Cell selection technology: Cell selection can be divided into four processes: frequency sweeping, cell search, system message processing, and camping.

The frequency sweeping may include: searching for, based on a standard and a frequency band that are supported by the terminal device, a cell covered in a network environment in which the terminal device is located and power of the cell. If having stored frequency information previously, the terminal device skips the frequency sweeping procedure and directly performs cell search. Only during initial cell selection, a band sweeping procedure is performed based on a band supported by a capability of the terminal device. For example, in a frequency sweeping process, a radio resource control (radio resource control, RRC) layer sends a band sweeping request to a physical layer, and the physical layer reports a swept frequency in the frequency band. After receiving the frequency, the RRC layer constructs a frequency list for cell search.

The cell search is a process of acquiring a cell with best coverage in the network environment based on a frequency sweeping result after the frequency sweeping ends, performing frame synchronization and slot synchronization on the cell, and obtaining a physical cell identifier. An objective of the cell search is to obtain frame synchronization and slot synchronization by using a primary synchronization signal (primary synchronization signal, PSS) and a secondary synchronization signal (secondary synchronization signal, SSS).

The system message processing and cell camping are processes of reading a system message of the cell after the cell search is completed, measuring signal strength and signal quality of the cell, and determining whether the cell meets a camping condition.

In the cell camping, determining whether the cell meets the camping condition is usually determining whether a cell selection received value and a cell selection quality value of the cell are both greater than zero.

The cell selection received value=P1-P2-P3-P4-P5. P1 is reference signal received power (reference signal received power, RSRP) of the cell, P2 is minimum receive strength required by the cell, P3 is an offset value corresponding to the minimum receive strength, P4 is a temporary offset, and P5=max(P6-P7, 0)-(min(P8, P7)-min(P6, P7)) or P5=max(P6-P7, 0). P7 is maximum radio frequency transmit power determined based on a power level of the terminal device, and P6 and P8 are maximum uplink transmit power of the terminal device and allowed by the cell, and are respectively obtained from different system messages.

The cell selection quality value =S1-S2-S3-S4. S1 is reference signal received quality (reference signal received quality, RSRQ) of the cell, S2 is minimum RSRQ receive strength required by the cell, S3 is an offset value corresponding to the minimum RSRQ, and S4 is a temporary offset.

### 2. Cell reselection technology

The cell reselection can be classified into intra-frequency cell reselection and inter-frequency cell reselection. The intra-frequency cell reselection is cell reselection performed on a frequency same as that of a current serving cell, and does not include frequency priority processing. The inter-frequency cell reselection includes inter-frequency cell reselection and inter-system cell reselection. A best cell is determined based on frequency priority information.

For the intra-frequency cell reselection, the terminal device performs calculation, measurement, and sorting on signal quality of the current serving cell and a neighboring cell, and selects a cell with better signal quality as a new cell for camping.

When a cell selection received value is greater than a cell selection received value threshold, and a cell selection quality value is greater than a cell selection quality value threshold, the terminal device may not start intra-frequency measurement.

For the inter-frequency cell reselection, the terminal device first obtains priority information of a current serving cell and a neighboring cell, and then performs calculation, measurement, and sorting on signal quality of the current serving cell and the neighboring cell. For a cell with a low priority, a threshold for determining whether a cell selection condition is met is correspondingly increased, to increase a weight of a cell with a high priority, and then a cell with a highest priority that meets a signal quality standard is selected as a reselected cell for camping.

The cell selection technology and the cell reselection technology are mainly designed for a terminal device having a specific processing capability, and have a high requirement on a processing capability of the terminal device. The terminal device needs to evaluate cell quality of a neighboring cell, and needs to perform precise and complex parameter measurement. A terminal device (for example, a tag) with a low-complexity design and a limited capability cannot support precise parameter measurement. Therefore, the technologies are not friendly to the terminal device (for example, a tag) with a low-complexity design and a limited capability. In addition, for a tag, if the foregoing cell selection technology is used, large overheads are caused, tag access efficiency is affected, and a cell capacity is further affected.

In view of this, embodiments of this application provide a cell selection method. In the method, without complex measurement and calculation, a terminal device can determine whether a target cell is a cell on which camping is allowed. This lowers a requirement on a data processing capability of the terminal device, and reduces measurement overheads of the terminal device. Steps are simple and flexible. This is applicable to a terminal device with a low-complexity design and a limited capability, like a tag.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE-NR hybrid networking system, a device-to-device (device-to-device, D2D) system, a machine-to-machine (machine-to-machine, M2M) communication system, an internet of things (Internet of Things, IoT), a passive IoT (passive IoT, PIoT), another next generation communication system, or the like. Alternatively, the communication system may be a non-3GPP communication system, for example, a wireless local area network (wireless local area network, WLAN). This is not limited.

An embodiment of this application provides an example communication system. The communication system may include a terminal device and an access network device. The terminal device may be located within coverage provided by the access network device.

Optionally, the terminal device, also referred to as user equipment (user equipment, UE), a mobile station (mobile station, MS), a mobile terminal device (mobile terminal, MT), a terminal, or the like, is a device that provides voice and/or data connectivity for a user, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal device in industrial control (industrial control), a wireless terminal device in self-driving (self-driving), a wireless terminal device in remote medical surgery (remote medical surgery), a wireless terminal device in a smart grid (smart grid), a wireless terminal device in transportation safety (transportation safety), a wireless terminal device in a smart city (smart city), a wireless terminal device in a smart home (smart home), a tag, or the like.

Optionally, the tag may be considered as a terminal device with a low-complexity design and a limited capability. The terminal device may be a passive terminal device, to be specific, energy and a carrier that are needed when the terminal device works may be provided by an access network device. For example, a passive tag may be considered as a passive terminal device. It is clear that the terminal device may alternatively be an active terminal device or a semi-passive terminal device. This is not specifically limited in this application.

Optionally, the access network device is a radio access network (radio access network, RAN) node (or device) that connects the terminal device to a wireless network, and may also be referred to as a base station (base station, BS). Currently, for example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of an eNB in a long term evolution (long term evolution, LTE) system. Functions of some protocol layers are centrally controlled by a CU, functions of some or all of the remaining protocol layers are distributed in a DU, and the CU centrally controls the DU.

Optionally, the access network device in this application may also implement a function of a reader, or may implement a function of the excitation source shown in FIG. 2.

For example, the access network device in embodiments of this application may include base stations in various forms. As shown in (a) in FIG. 3, the access network device may be a micro base station (Micro BS), and the micro base station may communicate with a terminal device through a Uu interface. As shown in (b) in FIG. 3, the base station may be an AP, and the AP may communicate with a terminal device over a sidelink (sidelink, SL). As shown in (c) in FIG. 3, the base station may be an IAB node, and the IAB node may communicate with a macro base station (Macro BS) through a Uu interface, and communicate with a terminal device through a Uu interface.

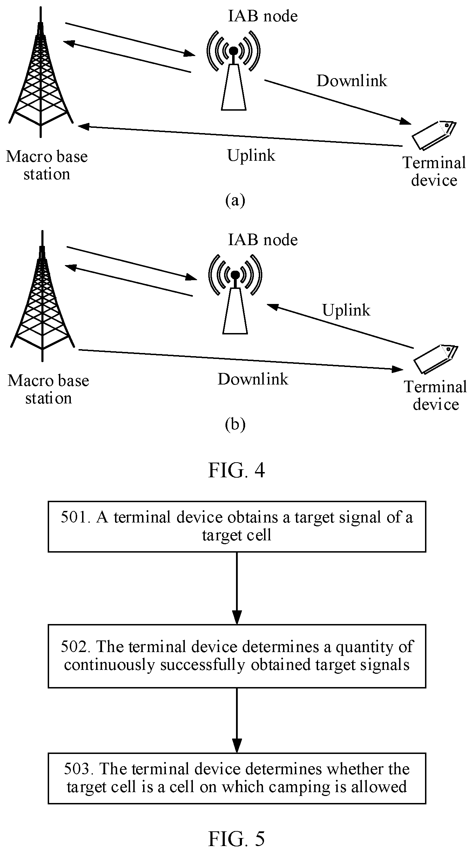

Optionally, in another product form, the access network device in this application may include a macro base station and an IAB node (or a relay node). As shown in (a) in FIG. 4, a downlink may be established between an IAB node and a terminal device, and an uplink may be established between a macro base station and the terminal device. In other words, the IAB node may be used as an excitation source to provide energy or a carrier for the terminal device, to implement a function of the helper shown in FIG. 2, and the macro base station may implement a function of the receiver shown in FIG. 2. Alternatively, as shown in (b) in FIG. 4, an uplink may be established between an IAB node and a terminal device, and a downlink may be established between a macro base station and the terminal device.

It may be understood that, in embodiments of this application, an execution body may perform some or all of the steps in embodiments of this application. The steps or operations are merely examples. In embodiments of this application, other operations or variations of various operations may be performed. In addition, the steps may be performed in a sequence different from a sequence presented in embodiments of this application, and not all the operations in embodiments of this application may be necessarily performed.

It should be noted that, in the following embodiments of this application, names of messages between devices, names of parameters in messages, or the like are merely examples, and may alternatively be other names during specific implementation. This is not specifically limited in embodiments of this application.

For example, a method provided in the following embodiments of this application may be applied to a scenario of a 5G NR system, or may be applied to a scenario of a wireless local area network. It is clear that an application scenario of this application is merely described herein as an example. The application scenario does not constitute any limitation on this application, and an application scenario of the method provided below is not specifically limited in this application either.

FIG. 5 shows a cell selection method according to an embodiment of this application. The communication method includes the following steps.

501. A terminal device obtains a target signal of a target cell.

Optionally, the target signal may be used by the terminal device to determine signal quality of the target cell.

Specifically, in this embodiment of this application, the target signal obtained by the terminal device is sent by a target access network device to which the target cell belongs. In other words, step 501 may include: the target access network device sends the target signal, and the terminal device receives the target signal sent by the target access network device. That is, that the terminal device obtains a signal may be understood as that the terminal device receives a signal.

In this embodiment of this application, the target signal includes a beacon (Beacon), a reference signal, a synchronization signal, a system message, downlink data, or the like. This is not specifically limited herein.

502. The terminal device determines a quantity of continuously successfully obtained target signals.

In an implementation, the terminal may determine, by determining a time interval at which the target signals are received, whether receiving is continuously successfully performed. For example, if the time interval at which the target signals are successfully received is greater than a time threshold, the terminal determines that receiving is not continuously performed; or if the time interval at which the target signals are successfully received is less than or equal to a time threshold, the terminal determines that receiving is continuously performed. The time threshold may be monitoring time, another preset time parameter, or a cell configuration parameter. This is not specifically limited herein.

In another implementation, each target signal may carry a number, and the terminal determines, by determining whether numbers of the received target signals are consecutive, whether receiving is continuously performed. For example, if the numbers of the received signals are consecutive, the terminal determines that receiving is continuously performed.

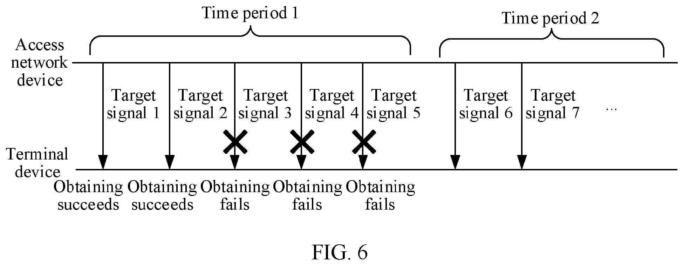

For example, as shown in FIG. 6, in this embodiment of this application, the target access network device may send a plurality of target signals to the terminal device in a time period, and correspondingly, the terminal device may receive the target signals. However, when the signal quality of the target cell is poor, the terminal device cannot receive all target signals, and can receive only some target signals. For example, in FIG. 6, the access network device sends five target signals to the terminal device, but the terminal device obtains only two target signals.

In this embodiment of this application, the target access network device of the target cell may send target signals to the terminal device in a plurality of time periods. For example, in FIG. 6, the access network device sends five target signals in a time period 1, and also sends the target signal in a time period 2. If target signals obtained by the terminal device are sent by the target access network device in a same time period, the target signals obtained by the terminal device are continuous. If target signals obtained by the terminal device are not sent by the target access network device in a same time period, the target signals are discontinuous. In other words, when a plurality of target signals obtained by the terminal device are in a same time period, it may be considered that the plurality of target signals are continuous. If a plurality of target signals obtained by the terminal device are in a plurality of time periods, it may be considered that the target signals in different time periods are discontinuous. That is, in FIG. 6, a target signal 6 and a target signal 7 that are obtained by the terminal device in the time period 2 are discontinuous with a target signal 1 and a target signal 2 that are obtained in the time period 1, and the target signal 1 and the target signal 2 that are obtained in the time period 1 are continuous.

The foregoing uses an example in which the target access network device sends the target signal to the terminal device in a time period. In addition, the target signal may alternatively be sent in another time unit, for example, the target signal is sent in a frame or a subframe. This is not specifically limited herein. In this embodiment of this application, the terminal device may alternatively count, by using time at which the target signal is found as start time, a quantity of target signals continuously successfully obtained after the time. Alternatively, the terminal may periodically trigger, by using j as a periodicity, a procedure of counting a quantity of continuously successfully obtained target signals, where j may be carried in the target signal, or may be a preset parameter stored by the terminal.

In a possible implementation, the terminal device may alternatively determine only a quantity of target signals successfully obtained within time T, and does not consider whether the obtained target signals are continuous.

503. The terminal device determines whether the target cell is a cell on which camping is allowed.

In an implementation, when the quantity of target signals continuously successfully obtained by the terminal device is greater than a threshold b, that is, a cell selection criterion of the terminal device is met, the terminal device may determine that the target cell corresponding to the target signal is a cell on which camping is allowed, where the cell on which camping is allowed is a cell that meets the cell selection criterion of the terminal device; and the terminal device may select the target cell for communication.

In another implementation, after the terminal device determines that the quantity of continuously successfully received target signals is less than or equal to a threshold b, that is, a cell selection criterion requirement of the terminal device is not met, the terminal device determines that the target cell is a cell on which camping is not allowed, where the cell on which camping is not allowed is a cell that does not meet the cell selection criterion requirement of the terminal device; and the terminal device cannot select the target cell for communication.

In the implementation, when the quantity of target signals continuously successfully obtained by the terminal device is greater than the threshold b, the terminal device determines that the target cell meets the cell selection criterion of the terminal device. It may be understood that the cell selection criterion in this embodiment of this application is that the quantity of target signals continuously successfully obtained by the terminal device is greater than the threshold b.

Specifically, the terminal device determines that the quantity of continuously successfully obtained target signals is a, where a is a positive integer greater than the threshold b. The threshold b is a threshold required by the cell selection criterion of the terminal device. In other words, when the quantity a of target signals continuously successfully obtained by the terminal device is greater than the threshold b required by the cell selection criterion, the terminal device may determine that the target cell meets the cell selection criterion of the terminal device.

In this embodiment of this application, the threshold b may be preset, or may be configured by the terminal device, or may be configured by the target cell. For example, the target cell may include the threshold b in the target signal. This is not specifically limited herein.

Optionally, that the terminal device determines that the a target signals are continuously successfully obtained may include: the terminal device continuously successfully obtains the a target signals within time T1.

Optionally, T1 may be a time period. As shown in FIG. 6, in this embodiment of this application, the terminal device determines that the a target signals are continuously successfully obtained, to be specific, the terminal device continuously successfully obtains the a target signals in a time period in which the target access network device sends the target signals. As shown in FIG. 6, the target access network device sends five target signals in the time period 1, but the terminal device obtains only two target signals due to impact of the signal quality of the target cell. It may be understood that, when a quantity of target signals sent by the target access network device remains unchanged, a quantity of target signals obtained by the terminal device increases as the signal quality of the target cell increases. Therefore, the terminal device may measure the signal quality of the target cell based on the quantity of target signals obtained by the terminal device, to determine whether the target cell can be selected as a cell on which camping is allowed.

In the another implementation, when the terminal device determines that the quantity of continuously successfully obtained target signals is less than or equal to the threshold b required by a cell selection criterion, the terminal device determines that the target cell does not meet the cell selection criterion of the terminal device, and the terminal device determines that the target cell is a cell on which camping is not allowed.

Specifically, when a quantity of target signals obtained by the terminal device is less than or equal to the threshold b, because the threshold b is a threshold required by the cell selection criterion of the terminal device, the terminal device may determine that the quantity of continuously successfully obtained target signals does not meet the cell selection criterion requirement of the terminal device.

Optionally, that the terminal device determines that the quantity of continuously successfully obtained target signals is less than or equal to the threshold b required by the cell selection criterion may include: the terminal device determines that the quantity of target signals continuously successfully obtained within time T1 is less than or equal to the threshold b required by the cell selection criterion.

The terminal device determines, depending on whether the quantity of continuously successfully obtained target signals is greater than the threshold b, whether the target cell meets the cell selection criterion of the terminal device. In addition, the terminal device may alternatively determine, depending on whether a quantity of successfully obtained target signals is greater than the threshold b, whether the target cell meets the cell selection criterion of the terminal device, and does not consider whether the obtained plurality of target signals are continuous.

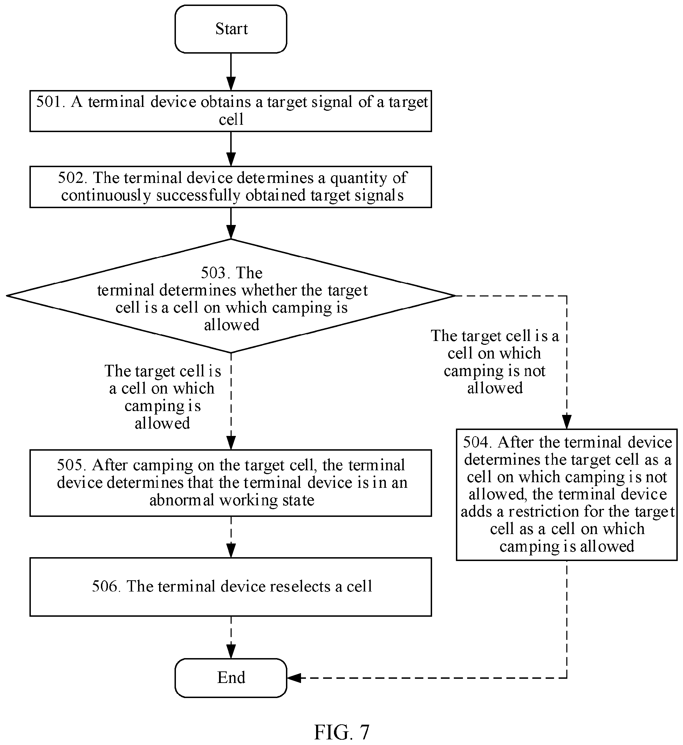

Optionally, in some implementation scenarios, as shown in FIG. 7, the method may further include the following step 504.

504. After the terminal device determines the target cell as a cell on which camping is not allowed, the terminal device adds a restriction for the target cell as a cell on which camping is allowed.

When the target cell does not meet the cell selection criterion of the terminal device, after determining the target cell as a cell on which camping is not allowed, the terminal device may reselect a cell as a cell on which camping is allowed.

In some cases, the restriction may be added for a cell that currently does not meet cell selection or cannot work normally, for example, a case in step 505.

When reselecting a cell, the terminal device may add the restriction for the target cell as a cell on which camping is allowed.

In a possible implementation, after the terminal device determines the target cell as a cell on which camping is not allowed, the terminal device cannot select, within time T3, the target cell as a cell on which camping is allowed.

In a possible implementation, if the terminal device determines that a quantity of target signals of the target cell that are received within time T2 is greater than a threshold c, the terminal device may re-determine the target cell as a cell on which camping is allowed, where the threshold c is greater than the threshold b.

Specifically, after determining the target cell as a cell on which camping is not allowed, the terminal device may reselect a cell on which camping is allowed. When reselecting a cell on which camping is allowed, the terminal device adds the restriction for the target cell as a cell on which camping is allowed. When it is determined whether the quantity of target signals obtained from the target cell meets the cell selection criterion, only when the quantity of target signals of the target cell is greater than the threshold c, the target cell can be re-determined as a cell on which camping is allowed, where the threshold c is greater than the threshold b. When it is determined whether another cell can be used as a cell on which camping is allowed, selection may be performed based on the threshold b.

The foregoing lists two implementable restrictions, or there may be another restriction. This is not specifically limited herein.

In this embodiment of this application, the terminal device adds the restriction for re-determining the target cell as a cell on which camping is allowed, so that the terminal device does not select again, within short time, the cell whose signal quality does not change, to improve cell selection efficiency.

In a possible implementation, if the terminal device determines that a quantity of target signals of the target cell that are received within time T2 is greater than a threshold c, the terminal device may re-determine the target cell as a cell on which camping is allowed, where the threshold c is less than the threshold b.

According to the cell selection method provided in this embodiment of this application, when the terminal device re-determines a cell on which camping is allowed, the terminal device relaxes the cell selection criterion requirement, to avoid that the terminal always cannot find a cell that meets the cell selection criterion condition.

Optionally, in some implementation scenarios, as shown in FIG. 7, after the terminal device determines the target cell as a cell on which camping is allowed, the method may further include the following steps.

505. After camping on the target cell, the terminal device determines that the terminal device is in an abnormal working state.

After the terminal device determines the target cell as a cell on which camping is allowed, and communicates with the target cell, if a first condition is met, the terminal device determines that the terminal device is currently in the abnormal working state.

Specifically, the first condition may include at least one of the following: a quantity of times that the terminal device does not continuously successfully receive the target signal is greater than m (where after the terminal device communicates with the target cell, the target access network device of the target cell still sends the target signal to the terminal device); the terminal device determines that a quantity of random access failures is greater than n; and the terminal device determines that a quantity of data transmission failures is greater than s. Alternatively, there may be another case in which it is determined that the terminal device is in the abnormal working state. For example, a block error rate of data received by the terminal device within time T4 is greater than a threshold t. This is not specifically limited herein.

506. The terminal device reselects a cell.

After the terminal device determines that the terminal device is in the abnormal working state or the cell does not meet the cell selection criterion, the terminal device may reselect a cell as a cell on which camping is allowed for connection.

In a possible implementation, when reselecting a cell, the terminal device may add a restriction for the target cell. A specific restriction may be similar to the restriction in step 504, and details are not described herein again.

In a possible implementation, a camped-on cell may send auxiliary information to the terminal device. The information may be carried in a signal like a connection release message and/or a system message. The signal may include information about another cell, for example, information such as a frequency, time, and a periodicity for sending a target signal by the another cell, so that the terminal device can perform cell selection based on the information.

In this embodiment of this application, the target cell may configure, by using the target signal, information such as a threshold for selecting a cell by the terminal device. Specifically, when the target signal is a system message, a synchronization signal, or a paging message, the target signal may carry at least one of the time T1, the time T2, the time T3, the time T4, the threshold b, and the threshold c.

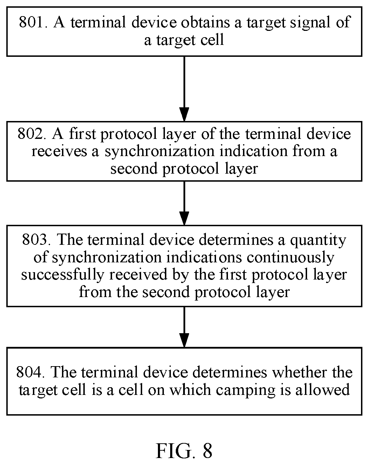

FIG. 8 shows another cell selection method according to an embodiment of this application. The cell selection method includes the following steps.

801. A terminal device obtains a target signal of a target cell.

Specific steps are similar to step 501 in the foregoing Embodiment 1, and details are not described herein again.

802. A first protocol layer of the terminal device receives a synchronization indication from a second protocol layer.

Optionally, after the terminal device obtains the target signal, the second protocol layer of the terminal device may generate a synchronization indication or an out-of-synchronization indication based on the target signal, and send the synchronization indication or the out-of-synchronization indication to the first protocol layer.

Specifically, the first protocol layer and the second protocol layer may be entity modules in the terminal device, the first protocol layer is a first module, and the second protocol layer is a second module.

In a possible implementation, that the second module (the second protocol layer) of the terminal device generates the synchronization indication or the out-of-synchronization indication includes the following steps.
a. The second module first measures a signal to interference plus noise ratio (signal to interference plus noise ratio, SINR) of the obtained target signal.
b. The second module determines a block error rate (block error rate, BLER) of the target signal based on the SINR of the target signal.

C. If the block error rate of the target signal is less than a threshold k, the second module generates a corresponding synchronization indication, where the synchronization indication may reflect that quality of communication between the target cell and the terminal device may be good; and transmits the synchronization indication to the first module. If the block error rate of the target signal is greater than or equal to a threshold k, the second module does not generate a synchronization indication, or the second module generates a corresponding out-of-synchronization indication, and transmits the out-of-synchronization indication to the first module, where the out-of-synchronization indication may reflect that quality of communication between the target cell and the terminal device may be poor.

In this embodiment of this application, better signal quality of the target cell indicates a lower block error rate of the target signal obtained by the terminal device. Correspondingly, more synchronization indications generated by the terminal device indicate fewer out-of-synchronization indications. It may be understood that, when a quantity of target signals sent by a target access network device remains unchanged, a quantity of synchronization indications received by the first protocol layer of the terminal device increases as signal quality of the target cell increases. Therefore, the terminal device may measure the signal quality of the target cell based on the quantity of synchronization indications received by the first protocol layer, to determine whether the target cell can be selected as a cell on which camping is allowed.

In this embodiment of this application, both the first protocol layer and the second protocol layer belong to protocol layers of the terminal device, and the first protocol layer is higher than the second protocol layer. The protocol layers of the terminal device may include a radio resource control (radio resource control, RRC) layer, a medium access control (medium access control, MAC) sublayer, a physical layer (physical layer, PHY), and other protocol layers, including the first protocol layer and the second protocol layer. For example, the first protocol layer may be the RRC layer, and the second protocol layer may be the PHY layer. Alternatively, the first protocol layer and the second protocol layer may be other two layers. This is not specifically limited herein.

In this embodiment of this application, a measurement periodicity of measuring the SINR of the target signal by the terminal device may be related to a reference signal, and the reference signal may be a signal like a beacon and a synchronization signal. For example, the terminal device may determine, based on an indication of a protocol or a broadcast message, that the measurement periodicity of the terminal device is N periodicities, where N is an integer greater than or equal to 1.

803. The terminal device determines a quantity of synchronization indications continuously successfully received by the first protocol layer from the second protocol layer.

The terminal device determines the quantity of synchronization indications continuously successfully received by the first protocol layer from the second protocol layer.

In this embodiment of this application, in an implementation, the terminal device may determine a quantity of synchronization indications and a quantity of out-of-synchronization indications that are continuously received by the first protocol layer within specific time. In another implementation, because the synchronization indications of the terminal device are in one-to-one correspondence with the target signals, when the target signals are obtained within specific limited time in step 801, there is no need to additionally limit the synchronization indication and the out-of-synchronization indication in terms of time.

An implementation of determining whether receiving is continuously successfully performed is similar to that described in step 502, and details are not described herein again.

804. The terminal device determines whether the target cell is a cell on which camping is allowed.

In an implementation, when the terminal device determines that the quantity of synchronization indications continuously successfully received by the first protocol layer and transmitted by the second protocol layer is greater than a threshold e, that is, the terminal device determines that the quantity of continuously successfully obtained synchronization indications meets a cell selection criterion requirement of the terminal device, the terminal device may determine the target cell as a cell on which camping is allowed, where the cell on which camping is allowed is a cell that meets the cell selection criterion requirement of the terminal device; and the terminal device may select the target cell for communication.

In another implementation, after the terminal device determines that a quantity of out-of-synchronization indications continuously successfully received by the first protocol layer is greater than a threshold e, or the terminal device determines that the quantity of synchronization indications continuously successfully received by the first protocol layer and transmitted by the second protocol layer is less than or equal to a threshold e, that is, the terminal device determines that the quantity of synchronization indications continuously successfully obtained by the terminal device does not meet a cell selection criterion requirement of the terminal device, the terminal device may determine the target cell as a cell on which camping is not allowed, where the cell on which camping is not allowed is a cell that does not meet the cell selection criterion requirement of the terminal device; and the terminal device cannot select the target cell for communication.

In the implementation, when the terminal device determines that the quantity of synchronization indications continuously successfully received by the first protocol layer from the second protocol layer is greater than the threshold e, the terminal device determines that the target cell meets a cell selection criterion of the terminal device. It may be understood that the cell selection criterion in this embodiment is that the quantity of synchronization indications continuously successfully received by the first protocol layer from the second protocol layer is greater than the threshold e.

Specifically, the terminal device determines that the first protocol layer continuously successfully receives d synchronization indications from the second protocol layer, where d is greater than the threshold e, and the threshold e is a threshold required by the cell selection criterion of the terminal device. In other words, when the quantity d of synchronization indications continuously successfully obtained by the terminal device is greater than the threshold e required by the cell selection criterion, the terminal device may determine that the target cell meets the cell selection criterion of the terminal device.

In the another implementation, when the terminal device determines that the quantity of synchronization indications continuously successfully received by the first protocol layer from the second protocol layer is less than or equal to the threshold e, the terminal device determines that the target cell does not meet a cell selection criterion of the terminal device.

Specifically, the terminal device determines that the quantity of synchronization indications continuously successfully received by the first protocol layer and transmitted by the second protocol layer is less than or equal to the threshold e, or the terminal device determines that the quantity of out-of-synchronization indications continuously successfully received by the first protocol layer is greater than the threshold e, where the threshold e is a threshold required by the cell selection criterion of the terminal device. In other words, when the quantity of synchronization indications continuously successfully obtained by the terminal device is less than or equal to the threshold e required by the cell selection criterion, or the quantity of out-of-synchronization indications continuously successfully obtained by the terminal device is greater than the threshold e required by the cell selection criterion, the terminal device may determine that the target cell meets the cell selection criterion of the terminal device.

In this embodiment of this application, the threshold e may be preset, or may be configured by the terminal device, or may be configured by the target cell. For example, the target cell may include the threshold e in the target signal. This is not specifically limited herein.

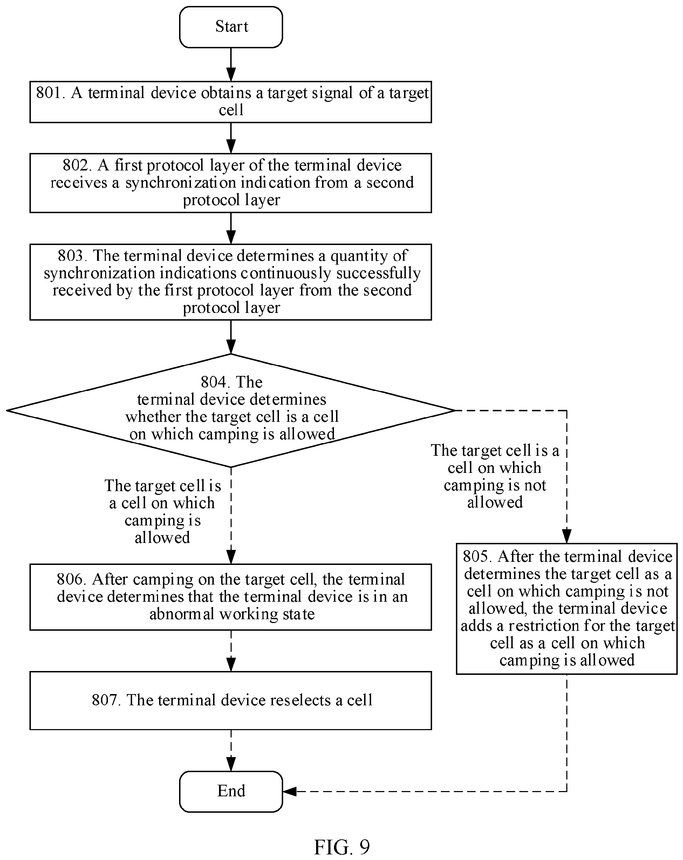

Optionally, in some implementation scenarios, as shown in FIG. 9, the method may further include the following step 805.

805. After the terminal device determines the target cell as a cell on which camping is not allowed, the terminal device adds a restriction for the target cell as a cell on which camping is allowed.

In some cases, the restriction may be added for a cell that currently does not meet cell selection or cannot work normally, for example, a case in step 505. After the terminal device camps on the target cell, and determines that the terminal device is in an abnormal working state, when reselecting a cell, the terminal device may also add the restriction for the target cell.

When the target cell does not meet the cell selection criterion of the terminal device, after determining the target cell as a cell on which camping is not allowed, the terminal device may reselect a cell as a cell on which camping is allowed. When reselecting a cell, the terminal device may add the restriction for the target cell as a cell on which camping is allowed.

In a possible implementation, after the terminal device determines the target cell as a cell on which camping is not allowed, the terminal device cannot select, within time T3, the target cell as a cell on which camping is allowed.

In a possible implementation, if the terminal device determines that a quantity of synchronization indications received within time T2 is greater than a threshold f, the terminal device may re-determine the target cell as a cell on which camping is allowed, where the threshold f is greater than the threshold e.

Specifically, after determining the target cell as a cell on which camping is not allowed, the terminal device may reselect a cell on which camping is allowed. When reselecting a cell on which camping is allowed, the terminal device adds the restriction for the target cell. When it is determined whether the quantity of out-of-synchronization indications continuously successfully received by the first protocol layer meets the cell selection criterion, only when a quantity of target signals of the target cell is greater than the threshold f, the target cell can be determined as a cell on which camping is allowed, where the threshold f is greater than the threshold e. When it is determined whether another cell can be used as a cell on which camping is allowed, selection may be performed based on the threshold e.

The foregoing lists two implementable restrictions, or there may be another restriction. This is not specifically limited herein.

In this embodiment of this application, the terminal device adds the restriction for re-determining the target cell as a cell on which camping is allowed, so that the terminal device does not select again, within short time, the target cell whose signal quality does not change, to improve cell selection efficiency.

In a possible implementation, if the terminal device determines that the quantity of synchronization indications continuously successfully received by the first protocol layer and transmitted by the second protocol layer is greater than a threshold l, the terminal device may re-determine the target cell as a cell on which camping is allowed, where the threshold l is less than the threshold e.

According to the cell selection method provided in this embodiment of this application, when the terminal device re-determines a cell on which camping is allowed, the terminal device relaxes the cell selection criterion requirement, to avoid that the terminal always cannot find a cell that meets the cell selection criterion condition.

Optionally, in some implementation scenarios, as shown in FIG. 9, after the terminal device determines the target cell as a cell on which camping is allowed, the method may further include the following steps.

806. After camping on the target cell, the terminal device determines that the terminal device is in the abnormal working state.

Specific steps are similar to step 505 in the foregoing Embodiment 1, and details are not described herein again.

807. The terminal device reselects a cell.

Specific steps are similar to step 506 in the foregoing Embodiment 1, and details are not described herein again.

In this embodiment of this application, the target cell may configure, by using the target signal, information such as a threshold for selecting a cell by the terminal device. Specifically, when the target signal is a system message, a synchronization signal, and a paging message, the target signal may carry/include at least one of the time T2, the time T3, time T4, the threshold k, the threshold e, and the threshold f.

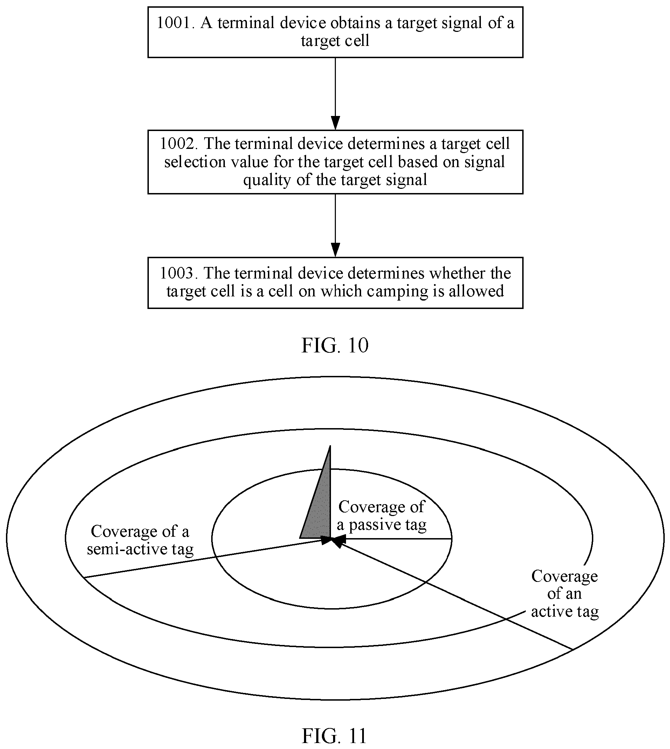

FIG. 10 shows another cell selection method according to an embodiment of this application. The cell selection method includes the following steps.

1001. A terminal device obtains a target signal of a target cell.

Specific steps are similar to step 501 in the foregoing Embodiment 1, and details are not described herein again.

1002. The terminal device determines a target cell selection value for the target cell based on signal quality of the target signal.

In this embodiment of this application, that the terminal device determines the target cell selection value for the target cell based on the signal quality of the target signal may include the following steps.

a. The terminal device measures RSRP of the target signal.

b. The terminal device determines the target cell selection value for the target cell by subtracting a threshold g from the RSRP of the target signal. The threshold g is a minimum receive level required by the target cell.

In this embodiment of this application, the minimum receive level required by the target cell is related to a type of the terminal device. For example, when the type of the terminal device is a tag, for different types of tags, the target cell requires different minimum receive levels. For example, an active tag, an active (active) tag, a passive tag, and a semi-passive tag have different power levels, and therefore have different minimum receive strength. Specifically, as shown in FIG. 11, generally, the active tag has largest power and also has largest tag coverage, and correspondingly, has higher minimum receive strength; the semi-active tag has second largest power and label coverage, and correspondingly, has high minimum receive strength; and the passive tag has smallest power and also has smallest label coverage, and correspondingly, has lowest minimum receive strength.

In another implementation, the threshold g may alternatively be a sum of a minimum receive level threshold and another parameter, and the another parameter may be a temporary offset generated due to a connection establishment failure and/or a parameter related to a cell selection priority. The cell selection priority may also be.

In this embodiment of this application, the threshold g may be preset, or may be specified in a protocol, or may be configured by the terminal device, or may be configured by the target cell. For example, the target cell may include the threshold g in the target signal. This is not specifically limited herein. The threshold g varies with different types of tags. Specifically, a plurality of thresholds may be defined, or the target cell configures a plurality of thresholds. Alternatively, different types of tags may correspond to thresholds, and different offsets are added to indicate a minimum level difference.

Optionally, the signal quality may be represented by using RSRS. Alternatively, another parameter may be used for representation, for example, RSRQ and other parameters. This is not specifically limited in this application.

In this embodiment of this application, a measurement periodicity of measuring the RSRP or the RSRQ of the target signal by the terminal device may be related to a reference signal, and the reference signal may be a signal like a beacon and a synchronization signal. For example, the terminal device may determine, based on an indication of a protocol or a broadcast message, that the measurement periodicity of the terminal device is N periodicities, where N is an integer greater than or equal to 1.

1003. The terminal device determines whether the target cell is a cell on which camping is allowed.

In a possible implementation, after the terminal device determines that target cell quality of the target cell meets a cell criterion requirement, for example, an S criterion, that is, the target cell selection value for the target cell meets a cell selection criterion of the terminal device, the terminal device determines the target cell as a cell on which camping is allowed, where the cell on which camping is allowed is a cell that meets the cell selection criterion of the terminal device; and the terminal device may select the target cell for communication. It may be understood that the cell selection criterion in this embodiment is that the target cell selection value for the target cell is greater than zero.

In another possible implementation, after the terminal device determines that the target cell selection value for the target cell is less than zero, that is, the terminal device determines that the target cell selection value for the target cell does not meet a cell selection criterion of the terminal device, the terminal device may determine the target cell as a cell on which camping is not allowed, where the cell on which camping is not allowed is a cell that does not meet a cell selection criterion requirement of the terminal device; and the terminal device cannot select the target cell for communication.

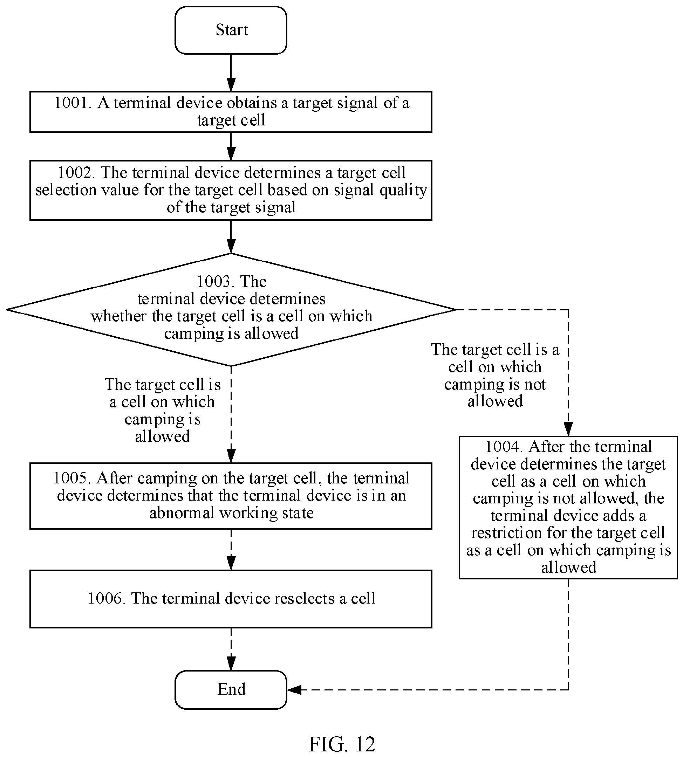

Optionally, in some implementation scenarios, as shown in FIG. 12, the method may further include the following step 1004.

1004. After the terminal device determines the target cell as a cell on which camping is not allowed, the terminal device adds a restriction for the target cell as a cell on which camping is allowed.

When the target cell does not meet the cell selection criterion of the terminal device, after determining the target cell as a cell on which camping is not allowed, the terminal device may reselect a cell as a cell on which camping is allowed. When reselecting a cell, the terminal device may add the restriction for the target cell as a cell on which camping is allowed.

In some cases, the restriction may be added for a cell that currently does not meet cell selection or cannot work normally, for example, a case in step 505. After the terminal device camps on the target cell, and determines that the terminal device is in an abnormal working state, when reselecting a cell, the terminal device may also add the restriction for the target cell.

In a possible implementation, after the terminal device determines the target cell as a cell on which camping is not allowed, the terminal device cannot select, within time T3, the target cell as a cell on which camping is allowed.

In a possible implementation, if the terminal device determines that a target cell selection value for the target cell within time T2 is greater than a threshold h, the terminal device may re-determine the target cell as a cell on which camping is allowed, where the threshold h is greater than zero.

Specifically, after determining the target cell as a cell on which camping is not allowed, the terminal device may reselect a cell on which camping is allowed. When reselecting a cell on which camping is allowed, the terminal device may add the restriction for the target cell as a cell on which camping is allowed. When it is determined whether the target cell selection value for the target cell meets the cell selection criterion, only when the target cell selection value for the target cell is greater than the threshold h, the target cell can be determined as a cell on which camping is allowed, where the threshold h is greater than zero. When it is determined whether another cell can be used as a cell on which camping is allowed, only when it is determined that a target cell selection value for the cell is greater than zero, the cell can be determined as a cell on which camping is allowed.

The foregoing lists two implementable restrictions, or there may be another restriction. This is not specifically limited herein.

In this embodiment of this application, the terminal device adds the restriction for re-determining the target cell as a cell on which camping is allowed, so that the terminal device does not select again, within short time, the target cell whose signal quality does not change, to improve cell selection efficiency.

In a possible implementation, if the terminal device determines that the target cell selection value for the target cell is greater than a threshold w, the terminal device may re-determine the target cell as a cell on which camping is allowed, where the threshold w is less than zero.

According to the cell selection method provided in this embodiment of this application, when the terminal device re-determines a cell on which camping is allowed, the terminal device relaxes the cell selection criterion requirement, to avoid that the terminal always cannot find a cell that meets the cell selection criterion condition.

Optionally, in some implementation scenarios, as shown in FIG. 12, after the terminal device determines the target cell as a cell on which camping is allowed, the method may further include the following steps.

1005. After camping on the target cell, the terminal device determines that the terminal device is in the abnormal working state.

Specific steps are similar to step 505 in the foregoing Embodiment 1, and details are not described herein again.

1006. The terminal device reselects a cell.

Specific steps are similar to step 506 in the foregoing Embodiment 1, and details are not described herein again.

In this embodiment of this application, the target cell may configure, by using the target signal, information such as a threshold for selecting a cell by the terminal device. Specifically, when the target signal is a system message, a synchronization signal, and a paging message, the target signal may carry/include at least one of the time T2, the time T3, time T4, the threshold g, and the threshold h.

It may be understood that to implement the foregoing functions, the terminal device includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design restrictions of the technical solutions. A person skilled in the art may use different methods to implement the described functions for each particular application, but it should not be considered that the implementation goes beyond the scope of this application.

In embodiments of this application, the terminal device may be divided into functional modules based on the method embodiments, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used.

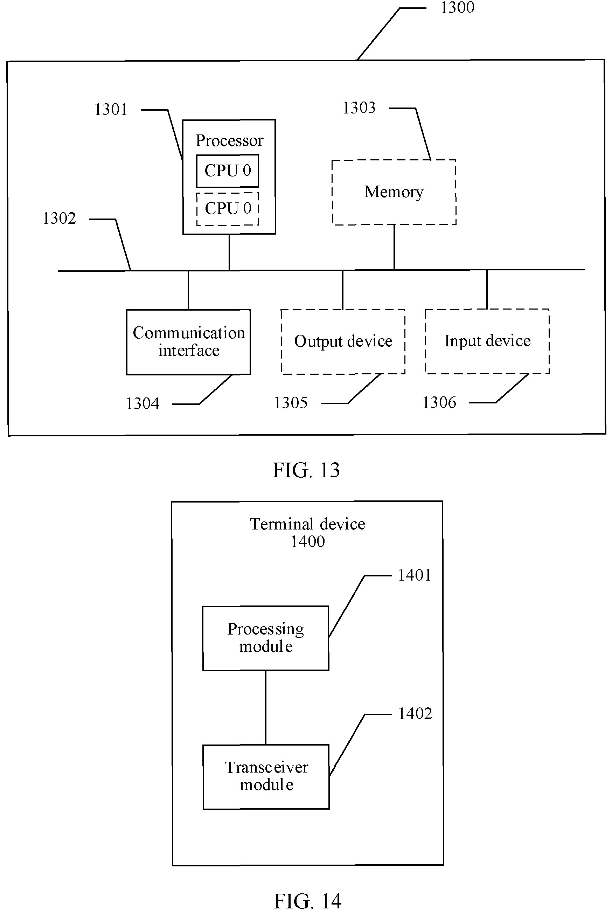

Optionally, during specific implementation, the terminal device may use a composition structure shown in FIG. 13, or include components shown in FIG. 13. In embodiments of this application, alternatively, the composition structure shown in FIG. 13 may be used, or the components shown in FIG. 13 may be included. FIG. 13 is a diagram of composition of a communication apparatus 1300 according to this application. The communication apparatus 1300 may be a chip or a system on chip in a terminal device, or may be a module, a chip, or a system on chip in a terminal device.

As shown in FIG. 13, the communication apparatus 1300 includes at least one processor 1301 and at least one communication interface (FIG. 13 is described merely by using an example in which one communication interface 1304 and one processor 1301 are included). Optionally, the communication apparatus 1300 may further include a communication bus 1302 and a memory 1303.

The processor 1301 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1301 may be another apparatus having a processing function, for example, a circuit, a component, or a software module. This is not limited.

The communication bus 1302 is configured to connect different components in the communication apparatus 1300, so that the different components can communicate with each other. The communication bus 1302 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line represents the bus in FIG. 13, but this does not mean that there is only one bus or only one type of bus.

The communication interface 1304 is configured to communicate with another device or a communication network. For example, the communication interface 1304 may be a module, a circuit, a transceiver, or any apparatus that can implement communication. Optionally, the communication interface 1304 may alternatively be an input/output interface located in the processor 1301, and is configured to implement signal input and signal output of the processor.

The memory 1303 may be an apparatus having a storage function, and is configured to store instructions and/or data. The instructions may be a computer program.

For example, the memory 1303 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1303 may exist independently of the processor 1301, or may be integrated with the processor 1301. The memory 1303 may be located inside the communication apparatus 1300, or may be located outside the communication apparatus 1300. This is not limited. The processor 1301 may be configured to execute the instructions stored in the memory 1303, to implement a method provided in the following embodiments of this application.

In an optional implementation, the communication apparatus 1300 may further include an output device 1305 and an input device 1306. The output device 1305 communicates with the processor 1301, and may display information in a plurality of manners. For example, the output device 1305 may be a liquid crystal display (liquid crystal display, LCD), a light emitting diode (light emitting diode, LED) display device, a cathode ray tube (cathode ray tube, CRT) display device, or a projector (projector). The input device 1306 communicates with the processor 1301, and may receive an input of a user in a plurality of manners. For example, the input device 1306 may be a mouse, a keyboard, a touchscreen device, or a sensing device.

It should be noted that the structure shown in FIG. 13 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented by hardware, software, or a combination of software and hardware.

Optionally, an example in which the communication apparatus is the terminal device in the foregoing method embodiments is used. FIG. 14 is a diagram of a structure of a terminal device 1400. The terminal device 1400 includes a processing module 1401 and a transceiver module 1402.

In some embodiments, the terminal device 1400 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module that are respectively configured to perform the receiving and sending steps performed by the terminal device in the foregoing method embodiments, and/or configured to support another process of the technology described in this specification. The processing module 1401 may be configured to perform the processing (for example, determining or generation) steps performed by the terminal device in the foregoing method embodiments, and/or configured to support another process of the technology described in this specification.

In a possible design:
the processing module 1401 is configured to obtain a target signal of a target cell via the transceiver module 1402; and
the processing module 1401 is further configured to: when the terminal device continuously successfully obtains a target signals, determine the target cell as a cell on which camping is allowed, where a is a positive integer greater than a threshold b, and the cell on which camping is allowed is a cell that meets a cell selection criterion requirement of the terminal device; or
the processing module 1401 is further configured to: when a quantity of target signals continuously successfully obtained by the terminal device is less than or equal to a threshold b, determine the target cell as a cell on which camping is not allowed, where the cell on which camping is not allowed is a cell that does not meet a cell selection criterion requirement of the terminal device.

Optionally, that the terminal device continuously successfully obtains the a target signals includes: the terminal device continuously successfully obtains the a target signals within time T1; or the quantity of target signals continuously successfully obtained by the terminal device being less than or equal to the threshold b includes: a quantity of target signals continuously successfully obtained by the terminal device within time T1 is less than or equal to the threshold b.

Optionally, the processing module 1401 is further configured to: after the terminal device determines the target cell as a cell on which camping is not allowed, when a quantity of target signals continuously successfully obtained within time T2 is greater than a threshold c, re-determine the target cell as a cell on which camping is allowed, where the threshold c is greater than the threshold b; or
optionally, the processing module 1401 is further configured to: after the terminal device determines the target cell as a cell on which camping is not allowed, skip, within time T3, selecting the target cell as a cell on which camping is allowed.

Optionally, the processing module 1401 is further configured to: after the terminal device determines the target cell as a cell on which camping is allowed, if a first condition is met, determine that the terminal device is in an abnormal working state, and re-determine, by the terminal device, a cell on which camping is allowed.

Optionally, the first condition includes at least one of the following: a quantity of times that the terminal device does not continuously successfully receive the target signal is greater than m; the terminal device determines that a quantity of random access failures is greater than n; the terminal device determines that a quantity of data transmission failures is greater than s; and the terminal device determines that a block error rate of data obtained within time T4 is greater than t.

Optionally, the target signal includes at least one of a beacon, a synchronization signal, a paging signal, a system message, and downlink data.

In another possible design:
the processing module 1401 is configured to obtain a target signal of a target cell via the transceiver module 1402, where the target signal is used to generate a synchronization indication; and
the processing module 1401 is further configured to: when a first protocol layer of the terminal device continuously successfully obtains d synchronization indications from a second protocol layer, determine the target cell as a cell on which camping is allowed, where d is a positive integer greater than a threshold e, protocol layers of the terminal device include the first protocol layer and the second protocol layer, and the first protocol layer is higher than the second protocol layer; or
the processing module 1401 is further configured to: when a quantity of synchronization indications continuously successfully obtained by a first protocol layer of the terminal device from a second protocol layer is less than or equal to a threshold e, or when a quantity of out-of-synchronization indications continuously successfully obtained by a first protocol layer of the terminal device from a second protocol layer is greater than a threshold e, determine the target cell as a cell on which camping is not allowed, where the cell on which camping is not allowed is a cell that does not meet a cell selection criterion requirement of the terminal device.

Optionally, the processing module 1401 is further configured to: after the terminal device determines the target cell as a cell on which camping is not allowed, when a quantity of synchronization indications continuously successfully received by the first protocol layer of the terminal device from the second protocol layer within time T2 is greater than a threshold f, re-determine the target cell as a cell on which camping is allowed, where the threshold f is greater than the threshold e; or
optionally, the processing module 1401 is further configured to: after the terminal device determines the target cell as a cell on which camping is not allowed, skip, within time T3, selecting the target cell as a cell on which camping is allowed.

Optionally, the processing module 1401 is further configured to: after the terminal device determines the target cell as a cell on which camping is allowed, if a first condition is met, determine that the terminal device is in an abnormal working state, and re-determine, by the terminal device, a cell on which camping is allowed.

Optionally, the first condition includes at least one of the following: a quantity of times that the terminal device does not continuously successfully receive the target signal is greater than m; the terminal device determines that a quantity of random access channel failures is greater than n; the terminal device determines that a quantity of data transmission failures is greater than s; and the terminal device determines that a block error rate of data obtained within time T4 is greater than t.

Optionally, the target signal includes at least one of a beacon, a synchronization signal, a paging signal, a system message, and downlink data.

In still another possible design:
the processing module 1401 is configured to obtain a target signal of a target cell via the transceiver module 1402;
the processing module 1401 is further configured to determine a target cell selection value for the target cell based on signal quality of the target signal; and
the processing module 1401 is further configured to: when the target cell selection value for the target cell is greater than zero, determine the target cell as a cell on which camping is allowed, where the cell on which camping is allowed is a cell that meets a cell selection criterion requirement of the terminal device; or
the processing module 1401 is further configured to: when the target cell selection value for the target cell is less than or equal to zero, determine the target cell as a cell on which camping is not allowed, where the cell on which camping is not allowed is a cell that does not meet a cell selection criterion requirement of the terminal device.

Optionally, the target cell selection value for the target cell is obtained by subtracting a threshold g from the signal quality of the target signal, and the threshold g is a minimum receive level of the terminal device.

Optionally, the processing module 1401 is further configured to: after the terminal device determines the target cell as a cell on which camping is not allowed, when a target cell selection value for the target cell within time T2 is greater than a threshold h, re-determine the target cell as a cell on which camping is allowed, where the threshold h is greater than zero; or
optionally, the processing module 1401 is further configured to: after the terminal device determines the target cell as a cell on which camping is not allowed, skip, within time T3, selecting the target cell as a cell on which camping is allowed.

Optionally, the processing module 1401 is further configured to: after the terminal device determines the target cell as a cell on which camping is allowed, if a first condition is met, determine, by the terminal device, that the terminal device is in an abnormal working state, and re-determine, by the terminal device, a cell on which camping is allowed.

Optionally, the first condition includes at least one of the following: a quantity of times that the terminal device does not continuously successfully receive the target signal is greater than m; the terminal device determines that a quantity of random access channel failures is greater than n; the terminal device determines that a quantity of data transmission failures is greater than s; and the terminal device determines that a block error rate of data obtained within time T4 is greater than t.

Optionally, the target signal includes at least one of a beacon, a synchronization signal, a paging signal, a system message, and downlink data.

All related content of the steps in the foregoing method embodiments may be cited in function descriptions of the corresponding functional modules. Details are not described herein again.

Optionally, in this application, that the processing module receives/sends information via the transceiver module may also be understood as that the processing module controls the transceiver module to receive/send information. Alternatively, that the processing module sends information via the transceiver module may be understood as that the processing module outputs information to the transceiver module, and the transceiver module sends the information; and that the processing module receives information via the transceiver module may be understood as that the transceiver module receives information and inputs the information to the processing module.

In this application, the terminal device 1400 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in terms of hardware implementation, a person skilled in the art may figure out that the terminal device 1400 may be in a form of the communication apparatus 1100 shown in FIG. 11.

In an example, a function/implementation process of the processing module 1401 in FIG. 14 may be implemented by the processor 1301 in the communication apparatus 1300 shown in FIG. 13 by invoking computer-executable instructions stored in the memory 1303. A function/implementation process of the transceiver module 1402 in FIG. 14 may be implemented by the communication interface 1304 in the communication apparatus 1300 shown in FIG. 13.

In some embodiments, when the terminal device 1400 in FIG. 14 is a chip or a chip system, a function/implementation process of the transceiver module 1402 may be implemented through an input/output interface (or a communication interface) of the chip or the chip system, and a function/implementation process of the processing module 1401 may be implemented by a processor (or a processing circuit) of the chip or the chip system.

Because the terminal device 1400 provided in this embodiment may perform the foregoing methods, for technical effects that can be obtained by the terminal device 1400, refer to the foregoing method embodiments. Details are not described herein again.

In a possible product form, the terminal device in embodiments of this application may be implemented by the following: one or more field programmable gate arrays (field programmable gate arrays, FPGAs), a programmable logic device (programmable logic device, PLD), a controller, a state machine, gate logic, a discrete hardware component, any other suitable circuit, or any combination of circuits capable of performing various functions described throughout this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in this embodiment of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the objective of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely an example. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located in a same place or distributed on a plurality of network units. Components displayed as units may be or may be not physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or a part of procedures (or functions) described in embodiments of this application are implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A cell selection method, wherein the method comprises:
obtaining, by a terminal device, a target signal of a target cell; and
when the terminal device continuously successfully obtains a target signals, determining, by the terminal device, the target cell as a cell on which camping is allowed, wherein a is a positive integer greater than a threshold b, and the cell on which camping is allowed is a cell that meets a cell selection criterion requirement of the terminal device; or
when a quantity of target signals continuously successfully obtained by the terminal device is less than or equal to a threshold b, determining, by the terminal device, the target cell as a cell on which camping is not allowed, wherein the cell on which camping is not allowed is a cell that does not meet a cell selection criterion requirement of the terminal device.

2. The method according to claim 1, wherein continuously successfully obtaining, by the terminal device, the a target signals comprises:
continuously successfully obtaining, by the terminal device, the a target signals within time T1; or
the quantity of target signals continuously successfully obtained by the terminal device being less than or equal to the threshold b comprises:
a quantity of target signals continuously successfully obtained by the terminal device within time T1 is less than or equal to the threshold b.

3. The method according to claim 1 or 2, wherein after determining, by the terminal device, the target cell as a cell on which camping is not allowed, the method further comprises:
when a quantity of target signals continuously successfully obtained within time T2 is greater than a threshold c, re-determining, by the terminal device, the target cell as a cell on which camping is allowed, wherein the threshold c is greater than the threshold b; or
after determining, by the terminal device, the target cell as a cell on which camping is not allowed, the method further comprises:
skipping, by the terminal device within time T3, selecting the target cell as a cell on which camping is allowed.

4. The method according to any one of claims 1 to 3, wherein after determining, by the terminal device, the target cell as a cell on which camping is allowed, the method further comprises:
if a first condition is met, determining, by the terminal device, that the terminal device is in an abnormal working state, and re-determining, by the terminal device, a cell on which camping is allowed.

5. The method according to claim 4, wherein the first condition comprises at least one of the following:
a quantity of times that the terminal device does not continuously successfully receive the target signal is greater than m;
the terminal device determines that a quantity of random access failures is greater than n;
the terminal device determines that a quantity of data transmission failures is greater than s; and
the terminal device determines that a block error rate of data obtained within time T4 is greater than t.

6. The method according to any one of claims 1 to 5, wherein the target signal comprises at least one of a beacon, a reference signal, a synchronization signal, a paging signal, a system message, and downlink data.

7. A cell selection method, wherein the method comprises:
obtaining, by a terminal device, a target signal of a target cell, wherein the target signal is used to generate a synchronization indication; and
when a first protocol layer of the terminal device continuously successfully obtains d synchronization indications from a second protocol layer, determining, by the terminal device, the target cell as a cell on which camping is allowed, wherein d is a positive integer greater than a threshold e, protocol layers of the terminal device comprise the first protocol layer and the second protocol layer, and the first protocol layer is higher than the second protocol layer; or
when a quantity of synchronization indications continuously successfully obtained by a first protocol layer of the terminal device from a second protocol layer is less than or equal to a threshold e, or when a quantity of out-of-synchronization indications continuously successfully obtained by a first protocol layer of the terminal device from a second protocol layer is greater than a threshold e, determining, by the terminal device, the target cell as a cell on which camping is not allowed, wherein the cell on which camping is not allowed is a cell that does not meet a cell selection criterion requirement of the terminal device.

8. The method according to claim 7, wherein after determining, by the terminal device, the target cell as a cell on which camping is not allowed, the method further comprises:
when a quantity of synchronization indications continuously successfully received by the first protocol layer of the terminal device from the second protocol layer within time T2 is greater than a threshold f, re-determining, by the terminal device, the target cell as a cell on which camping is allowed, wherein the threshold f is greater than the threshold e; or
after determining, by the terminal device, the target cell as a cell on which camping is not allowed, the method further comprises:
skipping, by the terminal device within time T3, selecting the target cell as a cell on which camping is allowed.

9. The method according to claim 7 or 8, wherein after determining, by the terminal device, the target cell as a cell on which camping is allowed, the method further comprises:
if a first condition is met, determining, by the terminal device, that the terminal device is in an abnormal working state, and re-determining, by the terminal device, a cell on which camping is allowed.

10. The method according to claim 9, wherein the first condition comprises at least one of the following:
a quantity of times that the terminal device does not continuously successfully receive the target signal is greater than m;
the terminal device determines that a quantity of random access channel failures is greater than n;
the terminal device determines that a quantity of data transmission failures is greater than s; and
the terminal device determines that a block error rate of data obtained within time T4 is greater than t.

11. The method according to any one of claims 7 to 10, wherein the target signal comprises at least one of a beacon, a reference signal, a synchronization signal, a paging signal, a system message, and downlink data.

12. A cell selection method, wherein the method comprises:
obtaining, by a terminal device, a target signal of a target cell;
determining, by the terminal device, a target cell selection value for the target cell based on signal quality of the target signal; and
when the target cell selection value for the target cell is greater than zero, determining, by the terminal device, the target cell as a cell on which camping is allowed, wherein the cell on which camping is allowed is a cell that meets a cell selection criterion requirement of the terminal device; or
when the target cell selection value for the target cell is less than or equal to zero, determining, by the terminal device, the target cell as a cell on which camping is not allowed, wherein the cell on which camping is not allowed is a cell that does not meet a cell selection criterion requirement of the terminal device.

13. The method according to claim 12, wherein the target cell selection value for the target cell is obtained by subtracting a threshold g from the signal quality of the target signal, and the threshold g is a minimum receive level of the terminal device.

14. The method according to claim 12 or 13, wherein after determining, by the terminal device, the target cell as a cell on which camping is not allowed, the method further comprises:
when a target cell selection value for the target cell within time T2 is greater than a threshold h, re-determining, by the terminal device, the target cell as a cell on which camping is allowed, wherein the threshold h is greater than zero; or
after determining, by the terminal device, the target cell as a cell on which camping is not allowed, the method further comprises:
skipping, by the terminal device within time T3, selecting the target cell as a cell on which camping is allowed.

15. The method according to any one of claims 12 to 14, wherein after determining, by the terminal device, the target cell as a cell on which camping is allowed, the method further comprises:
if a first condition is met, determining, by the terminal device, that the terminal device is in an abnormal working state, and re-determining, by the terminal device, a cell on which camping is allowed.

16. The method according to claim 15, wherein the first condition comprises at least one of the following:
a quantity of times that the terminal device does not continuously successfully receive the target signal is greater than m;
the terminal device determines that a quantity of random access channel failures is greater than n;
the terminal device determines that a quantity of data transmission failures is greater than s; and
the terminal device determines that a block error rate of data obtained within time T4 is greater than t.

17. The method according to any one of claims 12 to 16, wherein the target signal comprises at least one of a beacon, a reference signal, a synchronization signal, a paging signal, a system message, and downlink data.

18. A communication apparatus, wherein the communication apparatus comprises a processing module and a transceiver module, wherein
the processing module is configured to obtain a target signal of a target cell via the transceiver module; and
the processing module is further configured to: when the terminal device continuously successfully obtains a target signals, determine the target cell as a cell on which camping is allowed, wherein a is a positive integer greater than a threshold b, and the cell on which camping is allowed is a cell that meets a cell selection criterion requirement of the terminal device; or when a quantity of target signals continuously successfully obtained by the terminal device is less than or equal to a threshold b, determine the target cell as a cell on which camping is not allowed, wherein the cell on which camping is not allowed is a cell that does not meet a cell selection criterion requirement of the terminal device.

19. A communication apparatus, wherein the communication apparatus comprises a processing module and a transceiver module, wherein
the processing module is configured to obtain a target signal of a target cell via the transceiver module, wherein the target signal is used to generate a synchronization indication; and
the processing module is further configured to: when a first protocol layer of the terminal device continuously successfully obtains d synchronization indications from a second protocol layer, determine, by the terminal device, the target cell as a cell on which camping is allowed, wherein d is a positive integer greater than a threshold e, network layers of the terminal device comprise the first protocol layer and the second protocol layer, and the first protocol layer is higher than the second protocol layer; or when a quantity of synchronization indications continuously successfully obtained by a first protocol layer of the terminal device from a second protocol layer is less than or equal to a threshold e, or when a quantity of out-of-synchronization indications continuously successfully obtained by a first protocol layer of the terminal device from a second protocol layer is greater than a threshold e, determine, by the terminal device, the target cell as a cell on which camping is not allowed, wherein the cell on which camping is not allowed is a cell that does not meet a cell selection criterion requirement of the terminal device.

20. A communication apparatus, wherein the communication apparatus comprises a processing module and a transceiver module, wherein
the processing module is configured to obtain a target signal of a target cell via the transceiver module;
the processing module is further configured to determine a target cell selection value for the target cell based on signal quality of the target signal; and
the processing module is further configured to: when the target cell selection value for the target cell is greater than zero, determine the target cell as a cell on which camping is allowed, wherein the cell on which camping is allowed is a cell that meets a cell selection criterion requirement of the terminal device; or when the target cell selection value for the target cell is less than or equal to zero, determine the target cell as a cell on which camping is not allowed, wherein the cell on which camping is not allowed is a cell that does not meet a cell selection criterion requirement of the terminal device.

21. A communication apparatus, wherein the communication apparatus comprises a processor, and the processor is configured to run a computer program or instructions, to enable the communication apparatus to perform the method according to any one of claims 1 to 6, enable the communication apparatus to perform the method according to any one of claims 7 to 11, or enable the communication apparatus to perform the method according to any one of claims 12 to 17.

22. A computer-readable storage medium, wherein the computer-readable storage medium stores computer instructions or a program, and when the computer instructions or the program is run on a computer, the method according to any one of claims 1 to 6 is performed, the method according to any one of claims 7 to 11 is performed, or the communication apparatus is enabled to perform the method according to any one of claims 12 to 17.

23. A computer program product, wherein the computer program product comprises computer instructions, and when a part or all of the computer instructions are run on a computer, the method according to any one of claims 1 to 6 is performed, the method according to any one of claims 7 to 11 is performed, or the method according to any one of claims 12 to 17 is performed.
